# EUROPEAN PATENT SPECIFICATION

(11) **EP 3 186 404 B1**
(45) Date of publication and mention of the grant of the patent: **27.10.2021**
(21) Application number: 15830682.9
(22) Date of filing: 04.08.2015
(51) Int. Cl.: C22B 9/00, C22B 9/10, C22B 21/06

(54) **APPARATUS FOR REFINING MOLTEN ALUMINUM ALLOYS**
VORRICHTUNG ZUM RAFFINIEREN GESCHMOLZENER ALUMINIUMLEGIERUNGEN
APPAREIL D'AFFINAGE DES ALLIAGES D'ALUMINIUM FONDU

(30) Priority: 04.08.2014 US 201462032853 P
(43) Date of publication of application: 05.07.2017
(73) Proprietor: Pyrotek, Inc., Spokane, WA 99201 (US)
(72) Inventor: WILLIAMS, Tabb, Spokane, WA 99201 (US); KLEPACKI, Michael, Spokane, WA 99201 (US); MORAN, Ryan, Spokane, WA 99201 (US)
(74) Representative: Held, Stephan
(86) International application number: PCT/US2015/043558
(87) International publication number: WO 2016/022530

(56) References cited:
- JP-A- 2007 126 720
- US-A- 3 767 382
- US-A- 4 784 374
- US-A- 5 462 581
- US-A- 5 536 296
- US-A1- 2003 151 176
- US-A1- 2008 202 290
- US-A1- 2009 229 415
- None

## Description

### BACKGROUND

The present disclosure relates to an apparatus and method for refining molten aluminum alloys. It finds particular application in conjunction with a flux injection assembly configured to introduce flux to the molten aluminum alloy as it flows through a trough, and will be described with particular reference thereto. However, it is to be appreciated that the present exemplary embodiment is also amenable to other like applications.

Molten metals such as aluminum and aluminum alloys include trace amounts of impurities that are desired to be removed during refinement. In known refinement processes, aluminum is melted within a furnace and then transferred to a casting machine for metal formation. The aluminum is typically transferred from the furnace to the casting machine through a trough. The molten aluminum flows into the trough at an inlet and through the trough to exit at an outlet in a substantially continuous manner. In many instances, the trough includes a degassing treatment assembly and/or a filter that are intended to remove at least a portion of the impurities within the molten aluminum. Same of the impurities include dissolved hydrogen gas, particulates such as oxides, carbides, borides, alumina, magnesia, and various other elements such as dissolved alkali metals (sodium (Na), lithium (Li) and Calcium (Ca)). These impurities may cause undesirable effects in the casting process and to the properties of the finished product.

The treatment process generally utilized a flux injection mechanism that is configured to introduce a flux within the molten aluminum. Generally, flux comprises chlorine gas or mixtures of chlorine gas with an inert gas such as argon that, when combined, are known to assist with the removal of impurities from the molten aluminum. One such example of flux is marketed as PROMAGTM by Pyrotek, Inc of Spokane, Washington. Chlorine gas and chlorine salts are known to be effective in converting the alkali metals to salts which coalesce and rise to the surface of the molten material with the assistance of the inert gas. In particular, hydrogen gas diffuses into the inert gas bubbles and is removed as the particulate coalesces around the gas bubbles and rises to the top of the molten aluminum alloy. The flux and impurities form dross or a waste-byproduct which is skimmed off periodically or captured in a downstream filter. Generally, the chlorine and/or chlorine salts are removed with the dross. However, there has been pressure to eliminate the use of chlorine gas in applications such as these because of the environmental damage and burden of handling.

An in-line flux injection mechanism is disclosed in U.S. Pat. No. 3,767,382, which utilizes chlorine and/or chlorine salts discloses a known process of refining aluminum. Additionally, an apparatus and process for in-line aluminum treatment is disclosed in U.S. Pat. No. 8025712. These mechanisms disclose a process for refining molten aluminum and molten aluminum alloys that utilizes various chambers including at least one dispenser having an elongated rotating shaft attached to an impeller. The impellers are adapted to rotate within the molten aluminum as flux is discharged through or at the rotating shaft and distributed by the impeller within the chamber. The impeller and rotating shaft are particularly utilized to distribute the flux within the molten alloy in a manner sufficient to provide a broad distribution of the flux within the molten alloy to chemically interact with a high percentage of the impurities therein while utilizing a minimum amount of chlorine gas or salts. The impurities then rise to the surface of the molten aluminum alloy and can be removed.

US 5,536,296 A discloses a device for the treatment of molten metal, wherein the device comprises a hollow shaft connected to a source of a flux for treating molten aluminium. The shaft in the device has an outer edge and is connected to a source of pressurized gas for treating the molten aluminium contained in the device.

### BRIEF DESCRIPTION

The invention is defined by the appended claims. In accordance with one aspect of the disclosure, a flux injector assembly is provided for refining a molten material, wherein at least a portion of the material is aluminum, as it flows through a trough. The flux injector assembly includes an elongated dispensing rod having a hollow body and a dispensing rim that is configured to allow a flux and/or inert gas to travel through the hollow body and be injected into the molten material through the dispensing rim as the molten material flows through the trough. A baffle plate having a bottom edge is configured to be positioned within the molten material in the associated trough to allow the molten material to flow under the bottom edge of the baffle plate. The elongated dispensing rod is positioned at a downstream location relative to the baffle plate. The dispensing rim and the bottom edge are placed within the molten material where the rate of flow of molten material is increased as it passes the dispensing rim of the elongated dispensing rod to inject and mix the flux within the molten material.

Further, the dispensing rim of the elongated dispensing rod includes at least one notch positioned inwardly along the dispensing rim. This configuration allows for a lower gas flow or gas pressure through the dispensing rim thereby reducing the size of gas bubbles distributed from the dispensing rim thereby reducing an amount of turbulence along a surface of the molten material. This configuration assists with mixing the flux with the molten material.

In one embodiment, the dispensing rod is placed upstream of a baffle plate or chamber that is in fluid communication with the trough. The dispensing rim is positioned within the molten material and flux is distributed at a location upstream of the baffle plate. The flux becomes mixed with the molten material as it flows passed the baffle plate.

In another embodiment, a method of mixing flux within a flow of molten material is provided. An elongated dispensing rod having a hollow interior and a dispensing rim is provided within the flow of molten material. The dispensing rim of the dispensing rod is positioned adjacent to and downstream from a baffle plate within the flow of molten material. A flux is introduced to the dispensing rod to exit through the dispensing rim as the flow of molten material is manipulated as it flows passed the baffle plate. The flux is distributed into the flow of molten material having been manipulated by the baffle plate to increase the distribution area of the flux thereby improving flux mixing as it mixes within the flow of molten material.

In this embodiment, the dispensing rim of the elongated dispensing rod includes at least one notch positioned inwardly along the dispensing rim to assist with distributing the flux into the flow of molten material.

In a further embodiment, the flux injector assembly includes a vortex creating rotor in association with the elongated dispensing rod.

### BRIEF DESCRIPTION OF THE DRAWINGS

FIGURE 1 is a perspective view of an in-line metal treatment system with baffles and a rotary dispenser in accordance with the prior art;
FIGURE 2 is a cross sectional diagram of a flux injector assembly for refining a molten aluminum alloy as it flows through a trough in accordance with the disclosure;
FIGURE 3 is a cross sectional plan view of one embodiment of the flux injector assembly in accordance with the present disclosure;
FIGURE 4 is a cross sectional plan view of another embodiment of the flux injector assembly in accordance with the present disclosure;
FIGURE 5 is a cross sectional plan view of yet another embodiment of the flux injector assembly in accordance with the present disclosure;
FIGURE 6 is a cross sectional plan view of another embodiment of the flux injector assembly in accordance with the present disclosure;
FIGURE 7 is a flow chart of a method for mixing flux in a molten aluminum alloy in accordance with the present disclosure;
FIGURE 8 is a plan view of a flux injector housing in accordance with the present disclosure;
FIGURE 9A is a cross sectional side view of another embodiment of the flux injector assembly in accordance with FIGURE 6 of the present disclosure;
FIGURE 98 is a cross sectional bottom view of the flux injector assembly in accordance with FIGURE 9A of the present disclosure; and

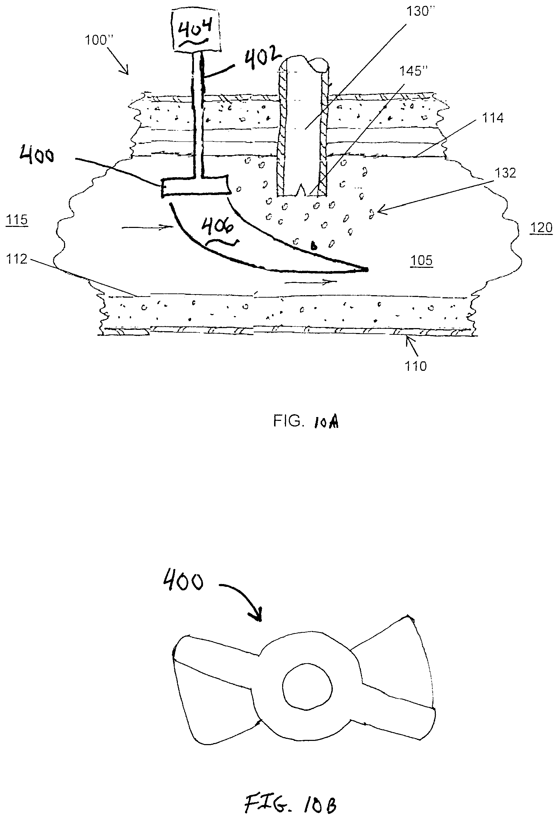

FIGURE 10A is a cross-sectional plan view of another embodiment of the flux injection assembly wherein a rotor has been added; and
FIGURE 10B is a top plan view of an exemplary rotor.

### DETAILED DESCRIPTION

Reference will now be made in detail to the embodiments of the disclosure, examples of which are illustrated in the accompanying drawings. Whenever possible, like reference numbers will be used to refer to like components or parts. For purposes of this description, similar aspects among the various embodiments described herein will be referred to by similar reference numbers. Similar features may be described utilizing a reference number having an apostrophe (') or double apostrophe (") for clarity and this description is not limited as to the combination of features as described. As will be appreciated, however, the structure of the various aspects can be different among the various embodiments.

For purposes of this disclosure, the term "molten material" will be used to describe aluminum or a mixture of alloys that includes aluminum, other metal element or alloy that has been melted into a molten form and is not limited as to the various elements that are included therein. The term molten material as used herein, includes at least a portion of aluminum.

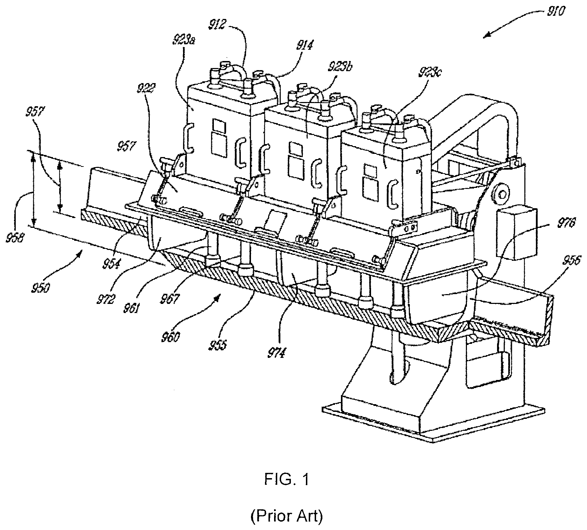

With reference to FIGURE 1, a prior art embodiment as disclosed by Patent No. US 8,025,712 is illustrated that includes an apparatus **910** for introducing a flux to refine molten material. The apparatus **910** includes a trough **950** and a series of rotatable dispensers **960** wherein at least one of which is downstream of a baffle plate **974.** The trough is a molten metal transfer launder which includes an upstream inlet **954** and a downstream outlet **956.** The trough **950** is adapted to allow molten material to flow from the inlet to the outlet. Generally, the trough transfers the molten material from a furnace, configured to melt the aluminum material into the molten metal alloy, to a casting mechanism to form the molten material into a desired shape.

Each rotatable dispenser **960** requires a driving mechanism such as an electrical motor for importing rotable motion to the impeller that is submerged within the flow of molten material. As described, the rotatable dispensers **960** are connected to a supply of gas that passes through the rotating shafts **961** of each dispenser **960** to be mixed with the molten material through internal passages of the rotating impellers. Baffle plates **972, 974** and **976** are positioned at various locations upstream and/or downstream of the series of rotatable dispensers **960** to allow the material to flow under and around and to assist with confining floating waste by-products (referred to as dross) at the surface of the material. The dross can be periodically removed, as the baffle plates prevent the dross from passing downstream and contaminating a filter attached to the outlet or contaminating the solidified final product. Notably, the rotable dispensers **960** are located within various chamber separated by the baffle plates **972, 974** and **976** as the trough extends from the inlet and outlet of the chambers defined by the baffle plate **972** and **976.**

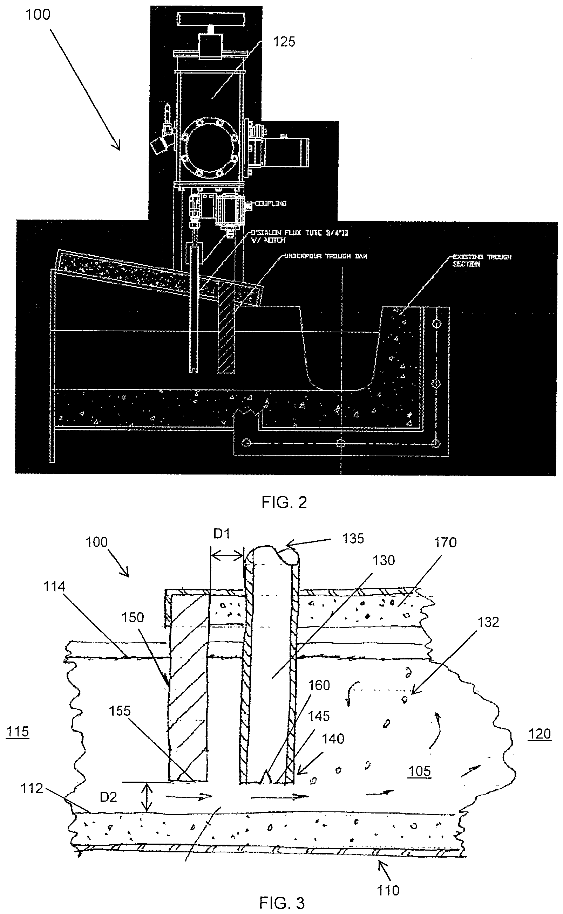

With reference to FIGURES 2-3, a flux injector assembly **100** is provided for refining a molten material **105** as it flows through a trough **110** in accordance with the present disclosure. The trough **110** is configured to receive molten material **105** from a furnace (not shown) or other source through an inlet **115** and transfer the molten material to exit at an outlet **120.**

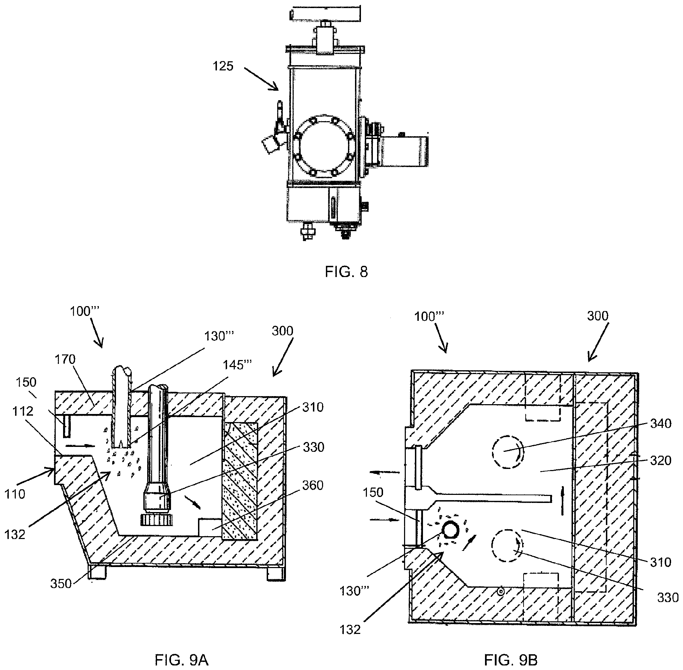

A flux injection housing **125** is configured to store, measure and distribute a flux material to at least one elongated dispensing rod **130** to be injected into the molten material **105** within the trough **110.** The housing **125** can be a pressurized type or a gravity fed type of flux injection mechanism as known in the art that is directly coupled to the dispensing rod **130.** One exemplary flux injection housing **125** is illustrated by FIGURE 8. The flux injection housing 125 can be configured to introduce flux alone or flux in combination with an inert gas into elongated dispensing rod 130.

The dispensing rod **130** includes an elongated hollow body that is coupled to the housing **125** at a first end **135** and has an opposite second end **140** that is configured to be placed within the flow of molten material **105.** The dispensing rod **130** can be made from a ceramic material, refractory material, seamless alloy steel tube or could be made from a graphite material. The rod **130** can be coated in an enamel coating and have a smooth surface that resists bonding with the molten material, flux or other gasses.

The dispensing rod **130** allows a flux **132** to travel through the hollow body and be injected into the molten material **105** through a dispensing rim **145** as the molten material flows through the trough **110.** The dispensing rim **145** is at the second end **140** of the dispensing rod **130** and can be configured in various geometric embodiments that interact with the flow of molten material to improve the distribution of flux **132** therein.

The assembly **100** includes a baffle plate **150** that is configured to be positioned within the trough **110** and be submerged within the flow of molten material **105.** The baffle plate **150** is configured to manipulate the flow of molten material as it flows through the trough **110** and passes the baffle plate **150.** The elongated dispensing rod **130** is positioned at a downstream location relative to the baffle plate **150.** The baffle plate can have various orientations that assist to manipulate the flow of molten material **105.**

In one embodiment, the dispensing rod **130** is spaced from the baffle plate **150** a first distance **D1.** The first dimension **D1** can be less than 10 inches and more particularly less than 8 inches. In one embodiment, the first dimension is between 3 inches and 5 inches. However, this dimension can be varied depending on the configuration of the trough **110** and baffle plate **150** along with a height of the flow of material within the trough and the mass flow rate or velocity of the material.

In one embodiment, the baffle plate **150** includes a generally planar orientation having a bottom edge **155** that is submerged within the flow of molten material. In this configuration, the bottom edge **155** is a second dimension **D2** from a bottom **112** of the trough **110** such that the flow of the molten material is manipulated as it passes the baffle plate **150.** The second dimension **D2** can be less than 5 inches and mare particularly less than 3 inches. In one embodiment, the second dimension is between 0.5 inches and 3 inches. However, this dimension can be varied depending on the dimensions and configuration of the trough **110** and the location of the dispensing rim **145** relative to the baffle plate **150.** In certain embodiments, D1 is less than two times D2, or D1 is less than 1.5 times D2, or D1 is substantially equal to D2.

In another embodiment, the baffle plate **150** can extend a width of the trough 110. This configuration allows for the flow of molten material to become generally turbulent at least adjacent to the location of the baffle plate **150** and dispensing rim **145.** This particular locus of generally turbulent flow is relative to the generally laminar flow of molten material upstream (from the inlet **115)** of the baffle plate **150.** The manipulated flow of the molten material passes the dispensing rim **145** of the dispensing rod **130** and provides a greater distribution of flux **132** within the flow of material.

The dispensing rim **145** is placed the second distance **D2** from the bottom **112** of the trough **110** such that the dispensing rim **145** is generally aligned with the bottom edge **155** of the baffle plate **150.** In this configuration the dispensing rim **145** and the bottom edge **155** are placed within the molten material wherein the rate of flow of molten material is increased and/or manipulated as it passes the dispensing rim **145** of the elongated dispensing rod **130.** This configuration increases the distribution of flux within the molten material as it is injected through the dispensing rod **130.**

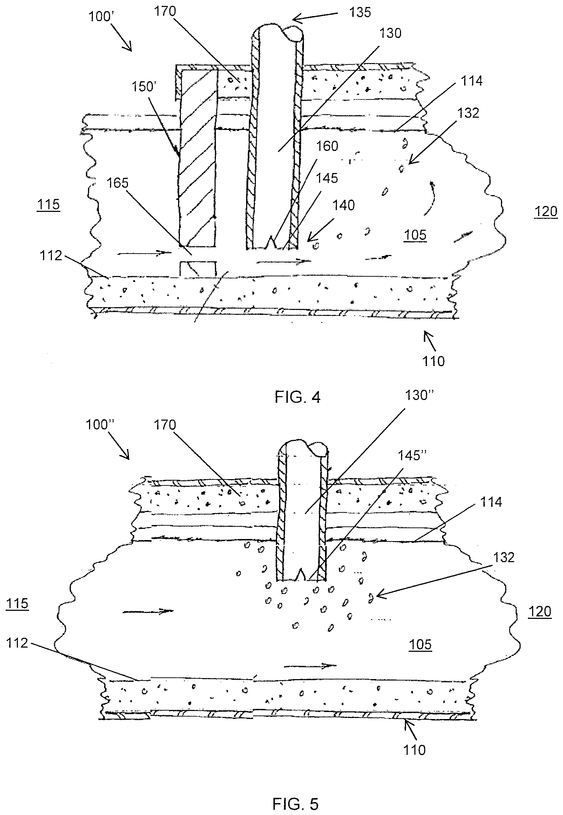

In embodiment of FIGURE 4, illustrated is another embodiment of a flux injector assembly **100'** in accordance with the present disclosure. In this embodiment, a baffle plate **150'** can be configured to extend within the tough **110** and include at least one aperture **165.** The baffle plate **150'** can about the bottom **112** or come close to abutting the bottom **112** of the trough **110** such that the flow of molten material at least partially passes through the at least one aperture **165.** In this configuration, the flow of molten material is manipulated as it passes through the aperture **165** so that the manipulated flow passes the dispensing rim **145** of the dispensing rod **130.** There can be a plurality of apertures **165** or a single aperture **165** and the aperture(s) **165** can define a pattern or have various geometric configurations such as slits, crosses, circles, arcuate shapes or any polygonal shape such that the flow of molten material is manipulated as it passes through the at least one aperture **165.** This configuration allows the manipulated molten material to pass the dispensing rim **145** as flux **132** is injected therein to increase the distribution of flux within the flow of molten material as it flows through the trough **110.**

In one embodiment, the elongated dispensing rod **130** and the baffle plate **150** extend from a cover **170.** The cover **170** supports the rod **130** and baffle plate **150** to ensure that the particular orientation of the rim **145** relative to the bottom edge **155** or aperture **165** is maintained. The housing **125** is also supported on the cover **170** such that the flux **132** can be gravity fed from the housing **125** through the dispensing rod **130.** Additionally, the cover **165** is positioned over the trough **110** to allow the rim **145** and bottom edge **155** of the baffle plate **150** to be submerged within the flow of molten material in a desired position to ensure that the flow is manipulated as disclosed herein.

In another embodiment, the elongated dispensing rod **130** can be aligned in a generally perpendicular manner relative to the baffle plate **150.** However, both the dispensing rod **130** and the baffle plate **150** can alternately be angled in an upstream or a downstream direction so long as the flow of molten material is manipulated as it passes the dispensing rim **145** within the trough **110.**

Additionally, the dispensing rim **145** can include various geometries that assist to distribute the flux **132** within the flow of molten material. In the invention, the dispensing rim **145** includes at least one notch **160** that extends inwardly along the rod **130.** Alternatively, the dispensing rim **145** can include a plurality of notches **160** that each extend inwardly along the rod **130.** This configuration allows for a lower gas flow or gas pressure through the dispensing rim thereby reducing the size of flux **132** or gas bubbles as they are distributed from the dispensing rim thereby reducing an amount of turbulence along a surface **114** of the molten material **105.** This configuration assists with mixing the flux **132** with the molten material after having been manipulated by the baffle plate **150.** The at least one notch **160** can have a variety of shapes such as a semi-circle, triangular, oval, or polygonal shape.

Various other shapes and configurations of the dispensing rim **145** are contemplated by this disclosure. In particular, the dispensing rim **145** could, further to the at least one notch, include an angled orientation in which the cross section of the rim **145** is generally angled relative to a central axis of the rod **130.** Additionally, the rim **145** could also include various protrusions such as a flared lip, radial flange, or fins of various shapes. Optionally, the rim **145** could also include a cross sectional opening that is flattened in the shape of a slit. The various shapes and orientations of the rim **145,** as contemplated by this disclosure, assist to inject flux in a manner that reduces turbulence of the flow along the surface and to provide a more uniformly distributed mixture of flux and/or gas within the flow of molten material as it is manipulated by the baffle plate **150.** The rod **130** is therefore not required to be rotatable.

FIGURE 5 illustrates another embodiment of a flux injector assembly **100"** in accordance with the present disclosure. In this embodiment, a dispensing rod **130"** is placed upstream of a baffle plate (not shown). In this embodiment, the dispensing rod **130"** includes a dispensing rim **145"** that is placed within the flow of molten material **105** at a position under the surface of the flow of molten material and upstream from an additional refinement filter or degassing assembly or rotatable dispensers (not shown) that are in fluid communication with the trough **110** towards the outlet **120.** The dispensing rim **145"** is located within the molten material **105** at a position that is closer to the surface **114** of the molten material **105** than to the bottom **112** of the trough **110** and flux **132** is distributed therein. In this embodiment, the dispensing rim **145"** is at a location upstream of any other assemblies or baffle plates. The flux **132** becomes mixed with the molten material **105** as it flows passed the dispensing rim **145"** and enters into the other degassing assemblies or passes the baffle plates.

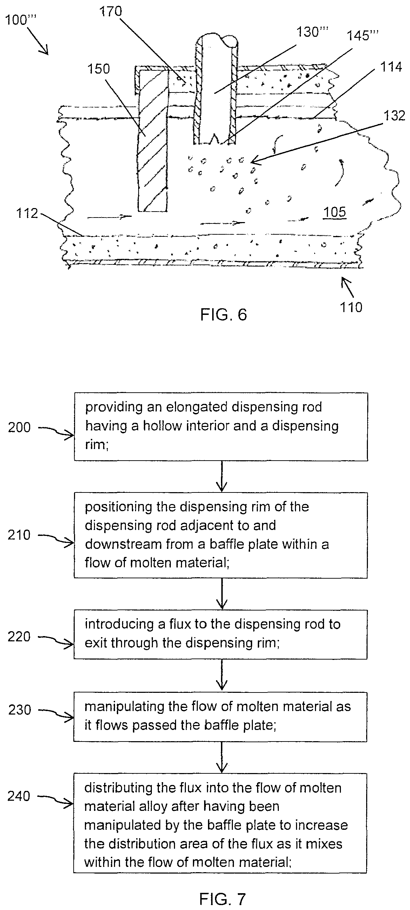

FIGURE 6 illustrates another embodiment of the assembly **100"'. A** dispensing rod **130'"** is placed downstream of the baffle plate **180.** In this embodiment, the dispensing rod **130'"** includes a dispensing rim **145'"** that is placed within the flow of molten material **105** at a position under the surface **114** of the flow of molten material and upstream from any additional refinement filter, degassing assembly or rotatable dispensers (not shown) that are in fluid communication with the trough **110** towards the outlet **120.** The dispensing rim **145'"** is located at a shallow position within the molten material **105** at a position that is closer to the surface **114** of the molten material **105** than to the bottom **112** of the trough **110** and flux **132** is distributed therein. The flux **132** becomes mixed with the molten material **105** as it flows passed the dispensing rim **145'"** and flows towards any other degassing assemblies, rotatable dispensers, subsequent chambers or additional downstream baffle plates.

Additionally, in the embodiment illustrated by FIGURES 9A and 98, the dispensing rod **130'"** and the dispensing rim **145'"** is at a location that can be considered within a first chamber **310** of a refining system assembly **300.** One example of such a refining system assembly is the SNIF® refining system assembly that is available from Pyrotek, Inc. of Spokane, Washington. However, this disclosure is not limited as other systems or assemblies may be combined with the features of the presently disclosed assembly **100"'.** Notably, the trough **110** is in fluid communication with the refining system assembly **300** and molten material **105** flows passed the baffle plate **150** and enters the first chamber **310** of the refining system assembly **300.** Molten material passes the dispensing rod **130'"** and dispensing rim **145'"** as flux **132** is introduced therein. The molten material and flux flows passed a first rotatable dispensing impeller **330** within the first chamber **310** and transfers to a second chamber **320** with a second rotatable impeller **340.** Flux **132** is injected from the dispensing rod **145'"** upstream of the first and second rotating impellers **330, 340.** Additionally, in this embodiment, a bottom **350** of the first chamber **310** is lower than the bottom **112** of the trough **110** whereby molten material flows downwardly and through an opening **360** between the first and second chambers **310, 320.** This arrangement further manipulates the flow of molten material and provides additional mixing of the flux therein.

These assemblies **100, 100', 100", 100'"** can be combined with various other degassing assemblies that are known in the prior art. In particular, the assemblies can be positioned upstream of at least one baffle plate or rotatable dispenser that include an impeller configured to provide flux or an inert gas within the flow of molten material. Additionally, a plurality of dispensing rods **130** can be provided within the assembly **100.** The plurality of dispensing rods **130** can be attached to the housing **125** or have additional housings **125** for metering and providing flux and or an inert gas therein. Additionally, the assembly **100** can be used within a trough **110** that includes various sections and geometries that interrupt the flow of molten material in various ways. Further, the assembly **100** can be provided at an upstream location from various types of molten material filters. In particular, the dispensing rod **130"** of the assembly **100"** can be placed upstream of additional refining system assemblies that are generally known in the art such as the SNIF® refining system assembly that is available from Pyrotek, Inc, of Spokane, Washington.

FIGURE 7 is a flow chart that discloses a method of mixing flux within a flow of molten aluminum alloy. In step **200,** the elongated dispensing rod is provided within the trough **110.** The rod **130** has a hollow interior with the dispensing rim submerged within the flow of molten material. In step **210,** the dispensing rim **145** of the dispensing rod **130** is positioned adjacent to and downstream from the baffle plate **150** within the flow of molten material. In step **220,** flux is introduced to the dispensing rod **130** to exit through the dispensing rim **145.**

The design parameters can be based on some consideration regarding the velocity and the volume of molten material as it traverses through the trough **110.** In particular, the flow of molten material is generally laminar at an upstream location of the baffle plate **150.** In step **230,** the flow of molten material is manipulated as it flows passed the baffle plate and becomes generally turbulent after passing the baffle plate **150** within the trough **110.** This generally turbulent flow is particularly located near the dispensing rim **145.** The location of the dispensing rim **145** is positioned downstream of the baffle plate **150** and near the bottom edge **155** such that the generally turbulent flow passes under the dispensing rim **145.** In step **240,** the flux is distributed into the flow of molten material after having been manipulated by the baffle plate **155** to increase the distribution area of the flux as it mixes within the flow of molten material.

The dispensing rim **145** of the elongated dispensing rod includes at least one notch **160** positioned inwardly along the dispensing rim to assist with distributing the flux into the flow of molten aluminum alloy.

With reference to FIGURES 10A and 10B, the present disclosure further contemplates the addition of a rotor **400** adjacent the elongated dispersing rod **130.** Particularly, rotor **400** can be suspended in the molten material **105** via a shaft **402.** Shaft **402** is mated to a motor **404** in any manner conventional in the art. Advantageously, because flux/inert gas are not required to be introduced via shaft **402** as that function is performed by elongated rod **130,** the mechanical mating between motor **404** and shaft **402** is less complex and costly and can be more robust. Operation of motor **404** results in the simultaneous rotation of shaft **402** and rotor **400.** It is anticipated that rotor **400** can aid in the dispersion of the flux material being introduced through elongated rod **130.** In particularly, rotor **400** can be located adjacent elongated rod **130** at a location which facilitates the formation of a vortex **406** in the region where flux enters the molten material. As used herein, the term vortex is intended to reflect a rotation of molten material having an orientation distinct from the motion of flow of the remaining molten material within the trough. The rotor can be positioned upstream of the elongated rod such that the vortex extends into the flow of molten material as it travels past the dispensing rim **145.** Alternatively, in certain embodiments, it may be desirable for the rotor and the associated vortex to be positioned downstream from the elongated rod. As a further contemplated alternative, it is feasible that the shaft and impeller assembly could be configured to pass through the elongated rod.

The rotor can be of any shape suitable for the creation of a vortex. Advantageously, the complex rotor designs of traditional degassing apparatus may not be required. For example, the propeller style of Figure 10B can be easily constructed of graphite or refractory ceramic and formed by machining or casting.

## Claims

1. A flux injector assembly for refining a molten material, at least a portion including aluminum, as it flows through a trough, the flux injector assembly comprising:
an elongated dispensing rod having a hollow body and a dispensing rim that is configured to allow a flux to travel through the hollow body and be injected into the molten material through the dispensing rim as the molten material flows through an associated trough;
a baffle plate having bottom edge that is configured to be positioned within the associated trough to allow molten material to flow under the bottom edge of the baffle plate, the elongated dispensing rod is positioned at a downstream location relative to the baffle plate, the dispensing rim and the bottom edge are placed within the molten material wherein the rate of flow of molten material is increased as it passes the dispensing rim of the elongated dispensing rod to mix the flux within the molten material,
wherein the dispensing rim of the elongated dispensing rod includes at least one notch positioned inwardly along the dispensing rim to assist with mixing the flux with the molten material.

2. The flux injector assembly of claim 1 wherein the dispensing rim is positioned within the molten aluminum alloy in alignment with the bottom edge of the baffle plate.

3. The flux injector assembly of claim 1 further including a rotor, shaft and motor combination, wherein said rotor is disposed adjacent said elongated rod.

4. A method of mixing flux within a flow of a molten material, at least a portion including aluminum, the method comprising:
providing an elongated dispensing rod having a hollow interior and a dispensing rim;
positioning the dispensing rim of the dispensing rod adjacent to and downstream from a baffle plate within a flow of molten material;
introducing a flux to the dispensing rod to exit through the dispensing rim;
manipulating the flow of molten material as it flows passed the baffle plate; and
distributing the flux into the flow of molten material after having been manipulated by the baffle plate to increase the distribution area of the flux as it mixes within the flow of molten material,
wherein the dispensing rim of the elongated dispensing rod includes at least one notch positioned inwardly along the dispensing rim to assist with distributing the flux into the flow of molten material.

5. The method of mixing flux of claim 4 further comprising providing a cover wherein the baffle plate and the elongated dispensing rod extend from the cover and into the flow of molten material.

6. The method of mixing flux of claim 4 wherein the dispensing rim is positioned within the molten material in alignment with the bottom edge of the baffle plate.

7. The method of mixing flux of claim 4 wherein the baffle plate includes at least one aperture for manipulating the flow of molten material as it passes the baffle plate.

8. The method of mixing flux of claim 4 wherein a vortex forming rotor is positioned adjacent the elongated dispensing rod.

## Patentansprüche

1. Flussmittel-Einspritzanordnung zum Raffinieren eines geschmolzenen Materials, wovon wenigstens ein Teil Aluminium umfasst, wenn es durch eine Wanne fließt, wobei die Flussmittel-Einspritzanordnung Folgendes umfasst:
einen länglichen Ausgabestab, der einen hohlen Körper und einen Ausgaberand aufweist, der so konfiguriert ist, dass sich ein Flussmittel durch den hohlen Körper bewegen und durch den Ausgaberand in das geschmolzene Material eingespritzt werden kann, wenn das geschmolzene Material durch eine zugehörige Wanne fließt;
eine Umlenkplatte, die eine Bodenkante hat, die so konfiguriert ist, dass sie in der zugehörigen Wanne so positioniert wird, dass geschmolzenes Material unter die Bodenkante der Umlenkplatte fließen kann, wobei der längliche Ausgabestab an einer stromabwärts liegenden Position relativ zur Umlenkplatte positioniert ist, wobei der Ausgaberand und die Bodenkante im geschmolzenen Material angeordnet sind, wobei die Durchflussmenge des geschmolzenen Materials zunimmt, wenn es den Ausgaberand des länglichen Ausgabestabs zum Mischen des Flussmittels mit dem geschmolzenen Material passiert,
wobei der Ausgaberand des länglichen Ausgabestabs wenigstens eine Kerbe aufweist, die längs des Ausgaberands nach innen positioniert ist, um das Mischen des Flussmittels mit dem geschmolzenen Material zu unterstützen.

2. Flussmittel-Einspritzanordnung nach Anspruch 1, wobei der Ausgaberand so in der geschmolzenen Aluminiumlegierung positioniert ist, dass er auf die Bodenkante der Umlenkplatte ausgerichtet ist.

3. Flussmittel-Einspritzanordnung nach Anspruch 1, die ferner eine Kombination aus Rotor, Welle und Motor umfasst, wobei der Rotor angrenzend an den länglichen Stab angeordnet ist.

4. Verfahren zum Mischen von Flussmittel mit einem Fluss aus geschmolzenem Material, wovon wenigstens ein Teil Aluminium umfasst, wobei das Verfahren die folgenden Schritte umfasst:
Bereitstellen eines länglichen Ausgabestabs, der einen hohlen Innenraum und einen Ausgaberand aufweist;
Positionieren des Ausgaberands des Ausgabestabs angrenzend an die Umlenkplatte und auf der stromabwärts liegenden Seite der Umlenkplatte in einem Fluss aus geschmolzenem Material;
Einleiten eines Flussmittels in den Ausgabestab, so dass es durch den Ausgaberand austritt;
Einwirken auf den Fluss aus geschmolzenem Material, wenn es hinter die Umlenkplatte fließt; und
Verteilen des Flussmittels in dem Fluss aus geschmolzenem Material, nachdem durch die Umlenkplatte darauf eingewirkt wurde, um den Verteilungsbereich des Flussmittels zu erhöhen, wenn es sich mit dem Fluss aus geschmolzenem Material mischt,
wobei der Ausgaberand des länglichen Ausgabestabs wenigstens eine Kerbe umfasst, die längs des Ausgaberands nach innen positioniert ist, um die Verteilung des Flussmittels im Fluss aus geschmolzenem Material zu unterstützen.

5. Verfahren zum Mischen von Flussmittel nach Anspruch 4, das ferner das Bereitstellen einer Abdeckung umfasst, wobei sich die Umlenkplatte und der längliche Ausgabestab von der Abdeckung und in den Fluss aus geschmolzenem Material erstrecken.

6. Verfahren zum Mischen von Flussmittel nach Anspruch 4, wobei der Ausgaberand im geschmolzenen Material so positioniert ist, dass er auf die Bodenkante der Umlenkplatte ausgerichtet ist.

7. Verfahren zum Mischen von Flussmittel nach Anspruch 4, wobei die Umlenkplatte wenigstens eine Öffnung aufweist, um auf den Fluss aus geschmolzenem Material einzuwirken, wenn dieser die Umlenkplatte passiert.

8. Verfahren zum Mischen von Flussmittel nach Anspruch 4, wobei ein wirbelbildender Rotor angrenzend an den länglichen Ausgabestab angeordnet ist.

## Revendications

1. Ensemble injecteur de flux pour raffiner un matériau fondu, au moins une partie incluant de l'aluminium, lorsqu'il s'écoule à travers une rigole, l'ensemble injecteur de flux comprenant :
une tige de distribution allongée ayant un corps creux et un rebord de distribution qui est configuré pour permettre à un flux de se déplacer à travers le corps creux et d'être injecté dans le matériau fondu à travers le rebord de distribution lorsque le matériau fondu s'écoule à travers une rigole associée ;
un déflecteur ayant un bord inférieur qui est configuré pour être positionné à l'intérieur de la rigole associée pour permettre à un matériau fondu de s'écouler sous le bord inférieur du déflecteur, la tige de distribution allongée est positionnée à un emplacement en aval par rapport au déflecteur, le rebord de distribution et le bord inférieur sont placés à l'intérieur du matériau fondu, dans lequel le débit de matériau fondu est augmenté lorsqu'il passe par le rebord de distribution de la tige de distribution allongée pour mélanger le flux à l'intérieur du matériau fondu,
dans lequel le rebord de distribution de la tige de distribution allongée inclut au moins une encoche positionnée vers l'intérieur le long du rebord de distribution pour aider à mélanger le flux avec le matériau fondu.

2. Ensemble injecteur de flux selon la revendication 1 dans lequel le rebord de distribution est positionné à l'intérieur de l'alliage d'aluminium fondu en alignement avec le bord inférieur du déflecteur.

3. Ensemble injecteur de flux selon la revendication 1 incluant en outre une combinaison de rotor, d'arbre et de moteur, dans lequel ledit rotor est disposé à proximité adjacente de ladite tige allongée.

4. Procédé de mélange de flux à l'intérieur d'un écoulement d'un matériau fondu, au moins une partie incluant de l'aluminium, le procédé comprenant :
la fourniture d'une tige de distribution allongée ayant un intérieur creux et un rebord de distribution ;
le positionnement du rebord de distribution de la tige de distribution à proximité adjacente d'un déflecteur, et en aval de celui-ci, à l'intérieur d'un écoulement de matériau fondu ;
l'introduction d'un flux dans la tige de distribution pour sortir à travers le rebord de distribution ;
la manipulation de l'écoulement de matériau fondu lorsqu'il s'écoule en étant passé par le déflecteur ; et la répartition du flux dans l'écoulement de matériau fondu après avoir été manipulé par le déflecteur pour augmenter la surface de répartition du flux lorsqu'il se mélange à l'intérieur de l'écoulement de matériau fondu, dans lequel le rebord de distribution de la tige de distribution allongée inclut au moins une encoche positionnée vers l'intérieur le long du rebord de distribution pour aider à répartir le flux dans l'écoulement de matériau fondu.

5. Procédé de mélange de flux selon la revendication 4 comprenant en outre la fourniture d'un couvercle dans lequel le déflecteur et la tige de distribution allongée s'étendent depuis le couvercle et dans l'écoulement de matériau fondu.

6. Procédé de mélange de flux selon la revendication 4 dans lequel le rebord de distribution est positionné dans le matériau fondu en alignement avec le bord inférieur du déflecteur.

7. Procédé de mélange de flux selon la revendication 4 dans lequel le déflecteur inclut au moins une ouverture pour manipuler l'écoulement de matériau fondu lorsqu'il passe par le déflecteur.

8. Procédé de mélange de flux selon la revendication 4 dans lequel un rotor de formation de vortex est positionné à proximité adjacente de la tige de distribution allongée.
